(19) Europäisches Patentamt
European Patent Office
Office européen des brevets

(11) **EP 4 510 012 A1**

(12) **EUROPEAN PATENT APPLICATION**

(43) Date of publication:
**19.02.2025 Bulletin 2025/08**

(21) Application number: **24183349.0**

(22) Date of filing: **20.06.2024**

(51) International Patent Classification (IPC):
**G06F 17/10** *(2006.01)*

(52) Cooperative Patent Classification (CPC):
**G06F 17/10**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.08.2023 JP 2023132018**

(71) Applicant: **FUJITSU LIMITED**
**Kawasaki-shi, Kanagawa 211-8588 (JP)**

(72) Inventors:
• **HASHIMA, Masayoshi**
  **Kawasaki-shi, Kanagawa, 211-8588 (JP)**
• **HARA, Nobuyuki**
  **Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **ARITHMETIC PROGRAM, ARITHMETIC METHOD, AND INFORMATION PROCESSING DEVICE**

(57)     A program of performing cut problem calculation on a target including nodes and edges set with weight values, the cut problem calculation including calculating a total weight value of edges cut when the nodes is divided into two groups, the program causing a computer to execute: performing the cut problem calculation without designating the number of divisions and specifying a calculation result of which the total value of the weight values satisfies a first condition, from among calculation results; specifying a calculation result satisfying a second condition; performing the cut problem calculation in which the number of divisions is designated and specifying a calculation result of which the total value of the weight values satisfying a third condition; and calculating a normalized value obtained by normalizing the total value of the weight values and acquiring the number of divisions satisfying a fourth condition from among the normalized values.

## FIG. 9A

# EP 4 510 012 A1

## Description

The present case discussed herein is related to an arithmetic program, an arithmetic method, and an information processing device.

### BACKGROUND

A method for calculating a MinCut problem or a MaxCut problem, for a calculation target, has been disclosed.
Japanese Laid-open Patent Publication No. 2020-004387 and Japanese Laid-open Patent Publication No. 2021-081863 are disclosed as related art.

### SUMMARY

### TECHNICAL PROBLEM

However, it takes a long time to calculate a MinCut problem and a MaxCut problem.
In one aspect, an object of the present case is to provide an arithmetic program, an arithmetic method, and an information processing device that can shorten a calculation time.

### SOLUTION TO PROBLEM

According to an aspect of the embodiments, there is provided an arithmetic program of performing cut problem calculation on a calculation target, the calculation target including a plurality of nodes and a plurality of edges, each node of the plurality of nodes being coupled to at least any one of other nodes with an edge of the plurality of nodes, each edge of the plurality of edges being set with a respective weight value, the cut problem calculation including calculating a total value of weight values of edges cut when the plurality of nodes included in the calculation target is divided into two groups. In an example, the arithmetic program is a program comprising instructions which, when executed by a computer, cause the computer to execute processing including: executing first processing of performing the cut problem calculation without designating the number of divisions that is the number of nodes that belong to the divided two groups and specifying a calculation result of which the total value of the weight values satisfies a first condition, from among the obtained calculation results; executing second processing of specifying a calculation result that satisfies a second condition for each number of divisions, from the calculation result specified in the first processing; executing third processing of performing the cut problem calculation in which the number of divisions is designated, on each number of divisions that is not able to be specified in the second processing and specifying a calculation result of which the total value of the weight values satisfies a third condition, for each number of divisions; and executing fourth processing of calculating a normalized value obtained by normalizing the total value of the weight values specified in the second processing and the third processing by a predetermined function, for each number of divisions and acquiring the number of divisions that satisfies a fourth condition from among the normalized values.

### ADVANTAGEOUS EFFECTS OF INVENTION

A calculation time can be shortened.

### BRIEF DESCRIPTION OF DRAWINGS

FIGs. 1A and 1B are diagrams illustrating graphs including a plurality of nodes;
FIG. 2 is a diagram for explaining a case where the number of nodes n is eight;
FIGs. 3A and 3B are diagrams illustrating an example of cutting;
FIGs. 4A and 4B are diagrams illustrating calculation results;
FIG. 5 is a diagram illustrating hierarchical clustering;
FIG. 6 is a diagram illustrating a time **required** for obtaining a problem;
FIG. 7 is a diagram illustrating a list in which M sums E are registered;
FIG. 8 is a diagram illustrating a transition of a solution x;
FIG. 9A is a block diagram illustrating an overall configuration of an information processing device, and FIG. 9B is a block diagram illustrating a hardware configuration of the information processing device;
FIG. 10A is a flowchart illustrating an example of an operation in a case where the information processing device executes processing 1, and FIG. 10B is a diagram illustrating a list L1;

FIG. 11A is a flowchart illustrating an example of an operation in a case where the information processing device executes processing 2, and FIG. 11B is a diagram illustrating a list L2;

FIG. 12 is a flowchart illustrating an example of an operation in a case where the information processing device executes processing 3;

FIG. 13A is a flowchart illustrating an example of an operation in a case where the information processing device executes processing 4, and FIG. 13B is a diagram illustrating a list L3;

FIG. 14 is a flowchart illustrating processing according to a comparative example; and

FIG. 15 is a diagram illustrating a quadratic unconstrained binary optimization (QUBO) format.

## DESCRIPTION OF EMBODIMENTS

Prior to description of embodiments, outlines of the MaxCut problem and the MinCut problem will be described.

The MaxCut problem is a problem that divides vertexes (node) into two groups with respect to a weighted graph that is a problem for performing division so as to maximize a sum of weights of cut edges when the vertexes are divided into two groups. The MinCut problem is a problem that divides vertexes (node) into two groups with respect to a weighted graph that is a problem for performing division so as to minimize a sum of weights of cut edges when the vertexes are divided into two groups.

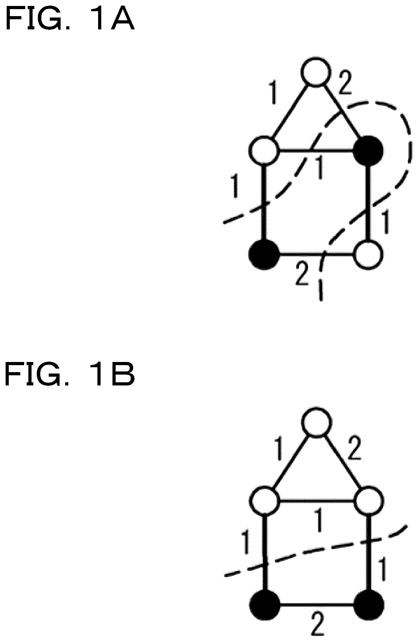

FIGs. 1A and 1B are diagrams illustrating graphs including the plurality of nodes. Each node is represented by a white circle or a black circle. Each node is coupled to at least any one of the nodes with an edge. A weight is set to each edge. At least any one of the edges is cut (cut) to be divided into two groups. In the example in FIG. 1A, the five edges are cut so as to be divided into a white circle group and a black circle group, and a sum of weights of the cut edges is maximized. In the example in FIG. 1B, the two edges are cut so as to be divided into the white circle group and the black circle group, and the sum of the weights of the cut edges is minimized.

In the following description, the MinCut problem will be described as an example.

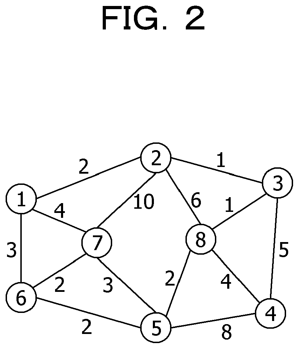

FIG. 2 is a diagram for explaining a case where the number of nodes n is eight. A node number of each node is set as i (= 1 to n). An edge between nodes i and j is represented as $e_{i,j}$. A weight of the edge $e_{i,j}$ is represented as $d_{i,j}$. For example, in the example in FIG. 2, a weight $d_{1,2}$ is two, and a weight $d_{2,3}$ is one.

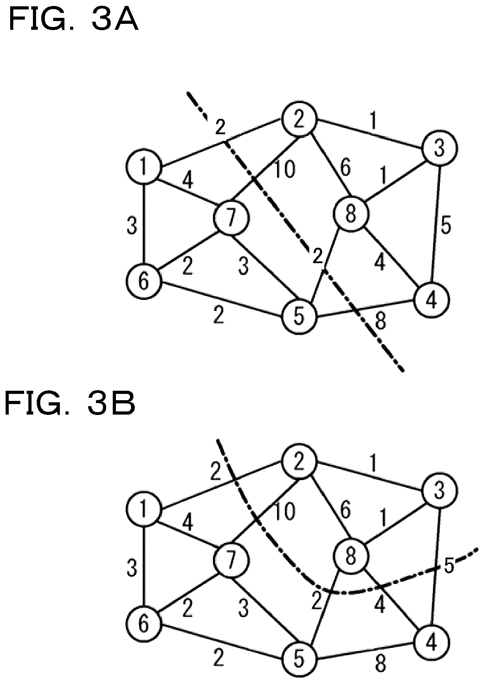

In the MinCut problem, when a node set is divided into two groups, the sum E of the weights of the cut edges is set to a minimum value. When the MinCut problem is calculated regarding the graph in FIG. 2, as illustrated in FIG. 3A, an edge $e_{1,2}$, an edge $e_{2,7}$, an edge $e_{5,8}$, and an edge $e_{4,5}$ are cut. In this case, the sum E is 2 + 10 + 2 + 8 = 22 that is the minimum value.

Next, the MinCut problem in which the number of divisions is designated will be described. For example, at the time of division into two groups, a constraint of the number of nodes to divide the nodes into c nodes and (n - c) nodes is provided. For example, the number of divisions is set to c = 3. In this case, as illustrated in FIG. 3B, the edge $e_{1,2}$, the edge $e_{2,7}$, the edge $e_{5,8}$, an edge $e_{4,8}$, and an edge $e_{3,4}$ are cut. In this case, the sum E under a constraint for setting the number of divisions c = 3 becomes the minimum value.

A calculation formula to obtain a solution of the MinCut problem can be expressed as the following formula. In the following formula, a variable x is n bits, and if the node i is in a group A, $x_i = 0$, and if the node i is in a group B, $x_i = 1$. By obtaining x so that the sum E becomes the minimum value in the following formula, it can be found which edge is cut to obtain the minimum value of the sum E.

[Mathematical Formula 1]

$$E = \sum_{i}^{n} \sum_{j>i} d_{i,j} \left( x_i - x_j \right)^2$$

A calculation formula to obtain a solution of the MinCut problem by designating the number of divisions c is as the following formula. In the following formula, $\alpha$ is a constant. By obtaining x so that the sum E becomes the minimum value in the following formula, it is found which edge is cut to obtain the minimum value of the sum E, regarding the designated number of divisions c.

[Mathematical Formula 2]

$$E = \sum_{i} \sum_{j>i}^{n} d_{i,j}\left(x_i - x_j\right)^2 + \alpha \left(\sum_{i}^{n} x_i - c\right)$$

Next, a case will be described where the minimum value of the sum E for each number of divisions c is normalized and the minimum value is selected from among the normalized minimum values (normalized minimum value $E_{norm}$). This problem is also referred to as a normalized division problem. First, the minimum value of the sum E for each number of divisions c is normalized by a specific function. For example, normalization is performed as in the following formula. In the following formula, assoc (GroupX) is a sum total of a sum of weights of edges in a group X and a sum of weights of cut edges.

[Mathematical Formula 3]

$$E_{norm} = \frac{E}{assoc(Group\ A)} + \frac{E}{assoc(Group\ B)}$$

By the normalization processing, it is possible to prevent a case where only one node is divided and to equalize weights of two groups. The number of divisions c is set from one to n/2 (in a case where n is odd number, n/2 - 1), the normalized minimum value $E_{norm}$ in each case is calculated. A minimum value is selected from among the normalized minimum values $E_{norm}$, and the number of divisions c with which the minimum value is obtained is sel ected .

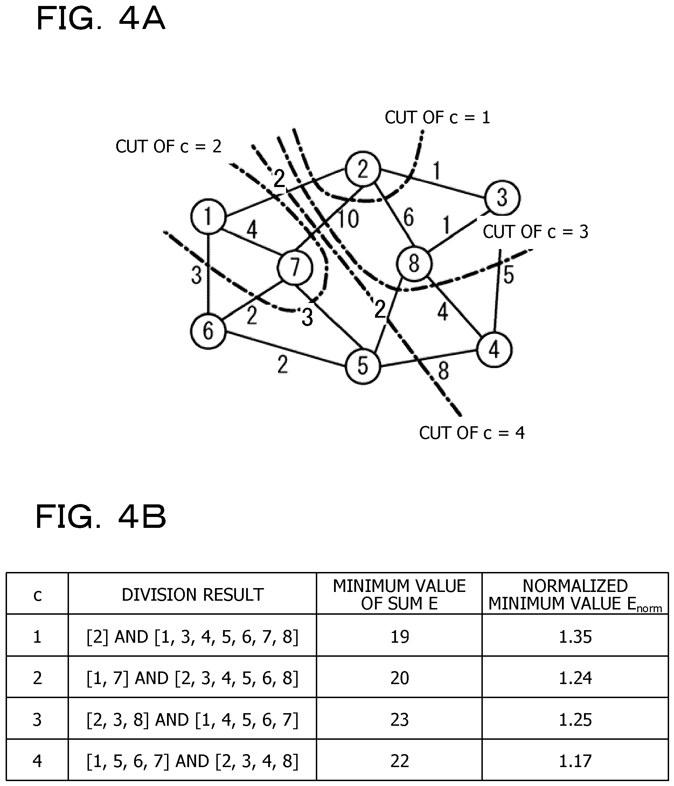

For example, as illustrated in FIGs. 4A and 4B, in a case of the number of divisions c = 1, by dividing the nodes into a node 2 and nodes 1, 3, 4, 5, 6, 7, and 8, the minimum value of the sum E = 19 is obtained, and the normalized minimum value $E_{norm}$ = 1.35 is calculated. In a case of the number of divisions c = 2, by dividing the nodes into the nodes 1 and 7 and the nodes 2, 3, 4, 5, 6, and 8, the minimum value of the sum E = 20 is obtained, and the normalized minimum value $E_{norm}$ = 1.24 is calculated. In a case of the number of divisions c = 3, by dividing the nodes into the nodes 2, 3, and 8 and the nodes 1, 4, 5, 6, and 7, the minimum value of the sum E = 23 is obtained, and the normalized minimum value $E_{norm}$ = 1.25 is calculated. In a case of the number of divisions c = 4, by dividing the nodes into the nodes 1, 5, 6, and 7 and the nodes 2, 3, 4, and 8, the minimum value of the sum E = 22 is obtained, and the normalized minimum value $E_{norm}$ = 1.17 is calculated. Since the normalized minimum value $E_{norm}$ is minimized in a case of the number of divisions c = 4, division for obtaining the minimum value of the sum E in a case of the number of divisions c = 4 is a solution.

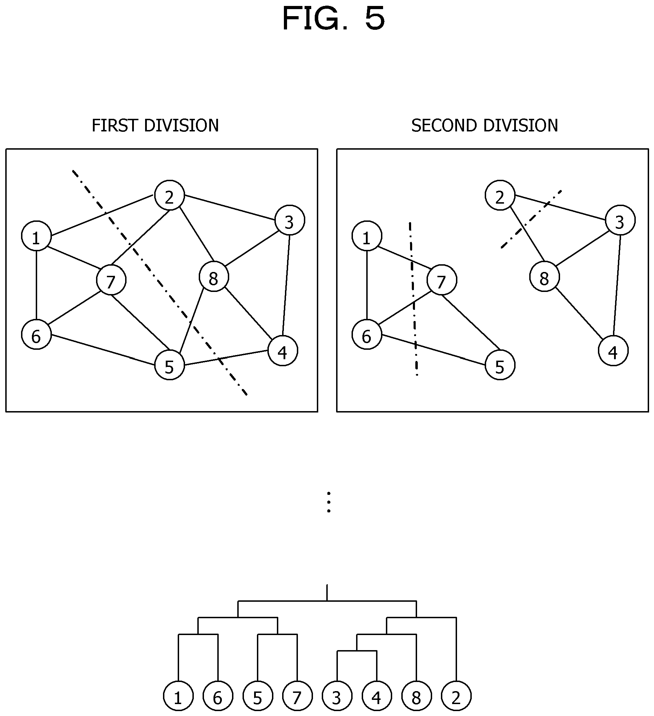

Next, hierarchical clustering will be described. The hierarchical clustering means to divide nodes into hierarchical groups, by repeating the calculation of the MinCut problem or the MaxCut problem described above. When the weight of the edge is assumed as a similarity between the nodes, by hierarchically repeating normalization division, a phylogenetic tree can be constructed. For example, as illustrated in FIG. 5, by performing the normalization division once, first division is performed. By further performing the normalization division on each divided group, second division is performed. By repeating this, clustering based on the similarity is performed so as to obtain the phylogenetic tree.

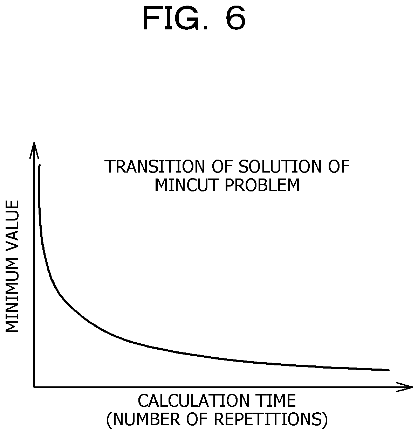

The calculation of the MinCut problem and the MinCut problem in which the number of divisions is designated as described above can be solved by optimization such as digital annealing or a metaheuristic method. However, since these optimization methods are realized by convergence calculation, as illustrated in FIG. 6, it takes a long time to obtain a solution. In particular, if the number of nodes is large, it takes a long time to obtain a solution. Furthermore, there is a problem in that the number of times of calculations increases, and the number of divisions c increases, if the number of nodes is larger.

Therefore, in the following embodiment, an example will be described in which a time **required** for obtaining a solution can be shortened.

[Embodiment]

First, the principle of the present embodiment will be described.

(Processing 1)

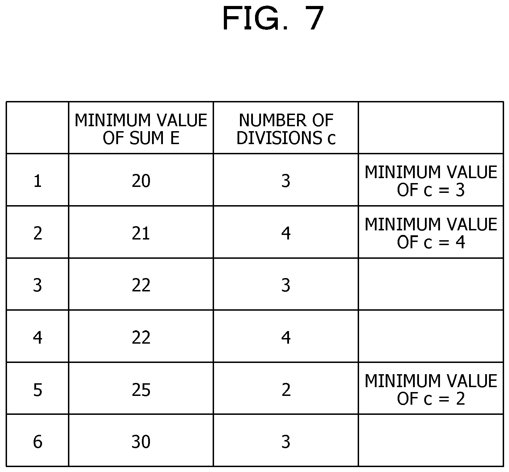

First, a MinCut problem is calculated without designating the number of divisions c. From each calculation result, the sums E are sorted in ascending order, and top M (< the number of nodes n) sums E are saved. FIG. 7 is a diagram illustrating a list in which the M sums E are registered. In the list, the numbers of divisions when the M sums E are obtained are saved. For example, the number of divisions c in a case where the sum E = 20 is obtained is three.

(Processing 2)

Next, a minimum value for each number of divisions is acquired from the M sums E, from a calculation result of the processing 1. For example, in a case of the number of divisions c = 2, the minimum value is 25, in a case of the number of divisions c = 3, the minimum value is 20, and the number of divisions c = 4, the minimum value is 21.

(Processing 3)

For the number of divisions that is not able to be acquired, the MinCut problem in which the number of divisions is designated is calculated. As a result, the minimum values of the sums E for all the numbers of divisions (c = 1 to n/2) are collected.

(Processing 4)

For each number of divisions (c = 1 to n/2), a normalized minimum value $E_{norm}$ is calculated from the minimum value of each sum E, and the minimum number of divisions c is selected from them.

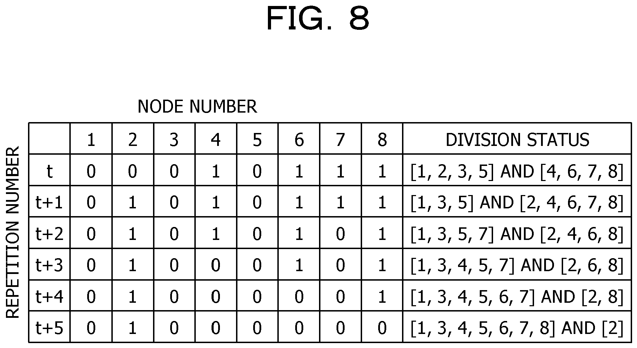

Here, the minimum values of the sum E as many as the specific number of divisions are not obtained by the processing 1, and a mechanism for obtaining the minimum values of the sums E for the plurality of numbers of divisions will be described. A metaheuristic method or the like is applied to the calculation of the MinCut problem, and a transition of a solution x is as in FIG. 8. In a case of the number of nodes n, the solution x is represented by n {0, 1} variables, and this means division into a group of zero nodes and a group of one nodes. In the calculation for repeatedly searching for the minimum value, a value of each variable of an immediately preceding solution is inverted (zero is changed to one, and one is changed to zero), and the smallest sum E is selected. As illustrated in FIG. 8, the number of divisions is not fixed, and the minimum values of the sums E for the plurality of numbers of divisions are obtained.

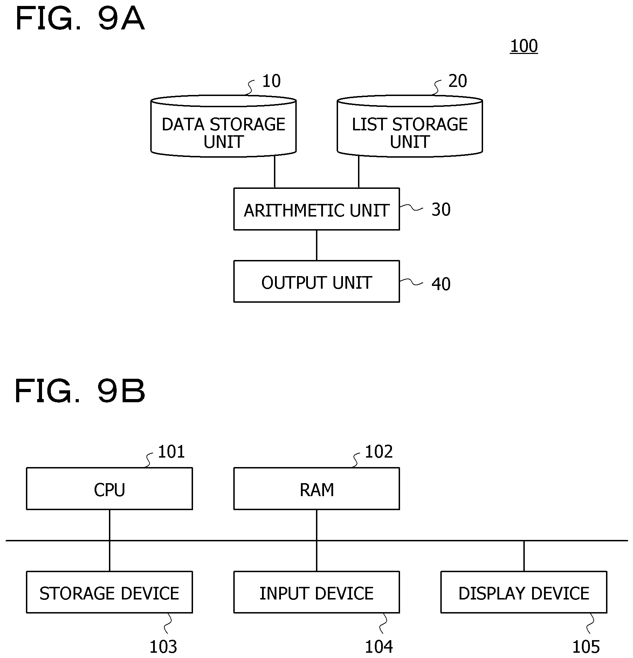

FIG. 9A is a block diagram illustrating an overall configuration of an information processing device 100 according to the present embodiment. As illustrated in FIG. 9A, the information processing device 100 includes a data storage unit 10, a list storage unit 20, an arithmetic unit 30, an output unit 40, or the like.

FIG. 9B is a block diagram illustrating a hardware configuration of the information processing device 100. As illustrated in FIG. 9B, the information processing device 100 includes a central processing unit (CPU) 101, a random access memory (RAM) 102, a storage device 103, an input device 104, a display device 105, and the like.

The central processing unit (CPU) 101 is a central processing device. The CPU 101 includes one or more cores. The random access memory (RAM) 102 is a volatile memory that temporarily stores a program to be executed by the CPU 101, data to be processed by the CPU 101, or the like. The storage device 103 is a nonvolatile storage device. As the storage device 103, for example, a read only memory (ROM), a solid state drive (SSD) such as a flash memory, a hard disk to be driven by a hard disk drive, or the like may be used. The storage device 103 stores an arithmetic program. The input device 104 is an input device such as a keyboard, or a mouse. The display device 105 is a display device such as a liquid crystal display (LCD). By executing the arithmetic program by the CPU 101, the data storage unit 10, the list storage unit 20, the arithmetic unit 30, the output unit 40, and the like are implemented. Note that hardware such as a dedicated circuit may be used as the data storage unit 10, the list storage unit 20, the arithmetic unit 30, the output unit 40, or the like.

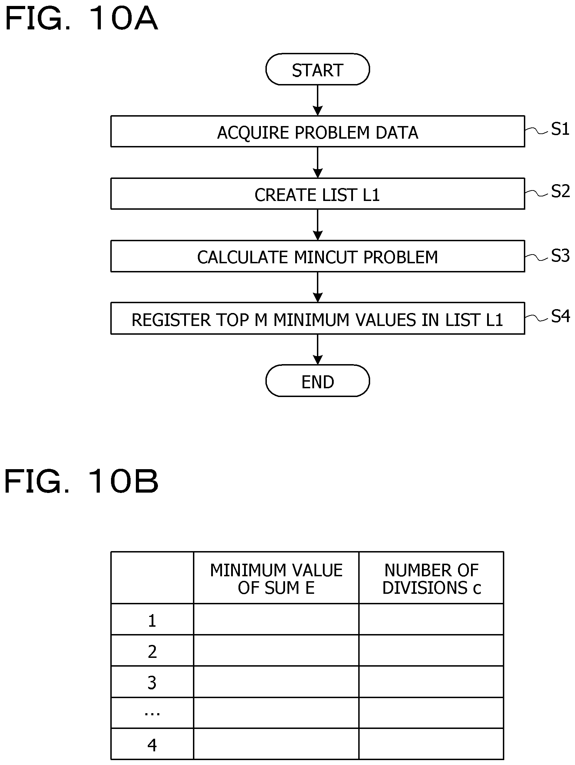

FIG. 10A is a flowchart illustrating an example of an operation in a case where the information processing device 100 executes the processing 1. As illustrated in FIG. 10A, the arithmetic unit 30 acquires problem data stored in the data storage unit 10 (step S1). The problem data is a graph including a plurality of nodes as illustrated in FIG. 2. A weight is set to each edge.

Next, the arithmetic unit 30 creates a list L1 to store the minimum value of the sum E and the number of divisions c in a case where the minimum value is obtained and stores the list L1 in the list storage unit 20 (step S2). Note that M calculation results are registered in the list L1. A user or the like sets a numerical value of M in advance. FIG. 10B is a diagram illustrating the list L1.

Next, the arithmetic unit 30 calculates the MinCut problem without designating the number of divisions c, on the problem data acquired in step S1 (step S3).

Next, the arithmetic unit 30 sorts the sums E in ascending order, from the calculation result in step S3 and registers top M minimum values and the number of divisions c when the minimum value is obtained in the list L1 (step S4). By executing the above processing, the processing 1 is completed.

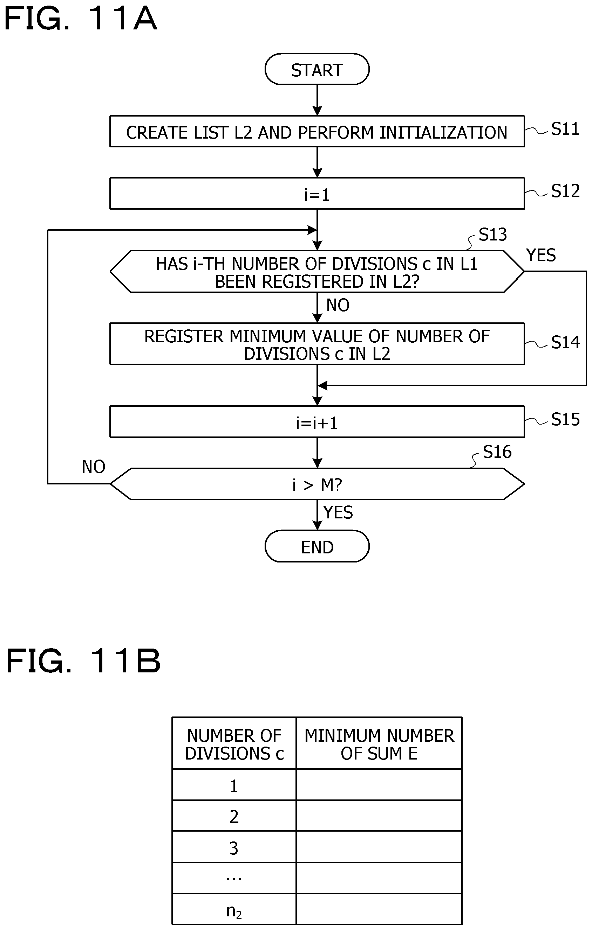

Subsequently, the information processing device 100 executes the processing 2. FIG. 11A is a flowchart illustrating an example of an operation in a case where the information processing device 100 executes the processing 2. As illustrated in FIG. 11A, the arithmetic unit 30 creates a list L2 to store the minimum value of the sum E, for each number of divisions c and performs initialization (step S11). In the list L2, n/2 (= $n_2$) calculation results as many as a half of the number of nodes n are registered. FIG. 11B is a diagram illustrating the list L2.

Next, the arithmetic unit 30 sets a variable i = 1 (step S12).

Next, the arithmetic unit 30 determines whether or not the calculation result has been registered in the list L2, for an i-th number of divisions c in the list L1 (step S13).

In a case where it is determined as "No" in step S13, the arithmetic unit 30 registers the minimum value for the number of divisions c in the list L2 (step S14).

Next, the arithmetic unit 30 sets i = i + 1 (step S15). In a case where it is determined as "Yes" in step S13, step S15 is executed.

Next, the arithmetic unit 30 determines whether or not i exceeds M (step S16). In a case where it is determined as "No" in step S16, step S13 is executed again. As described above, by executing the processing 2, the calculation result registered in the list L1 is registered in the list L2.

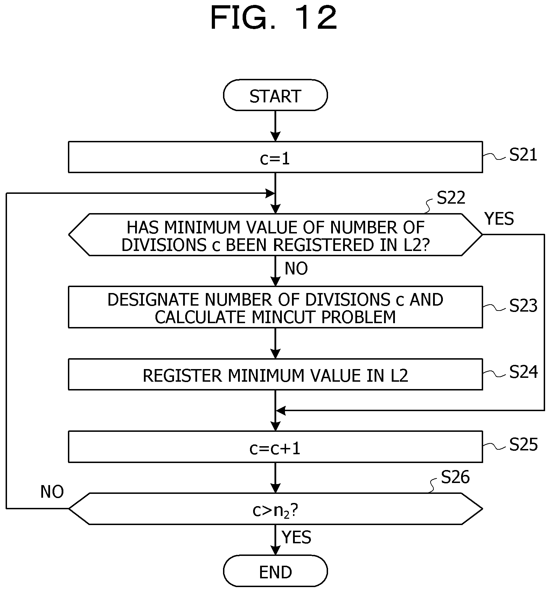

In a case where it is determined as "Yes" in step S16, the information processing device 100 executes the processing 3. FIG. 12 is a flowchart illustrating an example of an operation in a case where the information processing device 100 executes the processing 3. As illustrated in FIG. 12, the arithmetic unit 30 sets the number of divisions c as one (step S21).

Next, the arithmetic unit 30 determines whether or not the minimum value of the sum E for the number of divisions c has been registered in the list L2 (step S22).

In a case where it is determined as "No" in step S22, the arithmetic unit 30 calculates the MinCut problem in which the number of divisions c is designated, on the problem data acquired in step S1 and calculates the minimum value of the sum E (step S23).

Next, the arithmetic unit 30 registers the minimum value of the sum E calculated in step S23 in the list L2 (step S24).

Next, the arithmetic unit 30 sets the number of divisions c as c + 1 (step S25). In a case where it is determined as "Yes" in step S22, step S25 is executed.

Next, the arithmetic unit 30 determines whether or not the number of divisions c exceeds $n_2$ (step S26). In a case where it is determined as "No" in step S26, step S22 and the subsequent steps are executed again. By executing the processing 3, the MinCut problem in which the number of divisions is designated is calculated, for the number of divisions c that is not registered in the list L1, and is registered in the list L2.

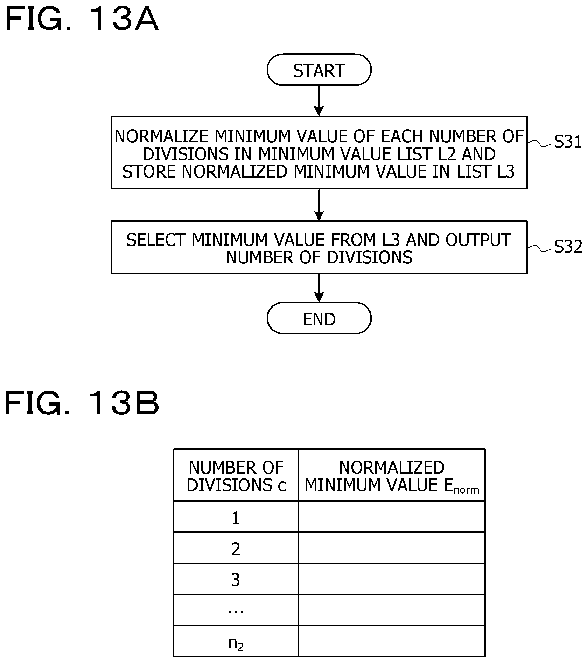

In a case where it is determined as "Yes" in step S26, the information processing device 100 executes the processing 4. FIG. 13A is a flowchart illustrating an example of an operation in a case where the information processing device 100 executes the processing 4. As illustrated in FIG. 13A, the arithmetic unit 30 normalizes the minimum value of the sum E for each number of divisions in the list L2, calculates the normalized minimum value $E_{norm}$, and stores the normalized minimum value in a list L3 (step S31). FIG. 13B is a diagram illustrating the list L3.

Next, the output unit 40 selects the minimum value from the normalized minimum value $E_{norm}$ in the list L3 and outputs the number of divisions c of the minimum value (step S32).

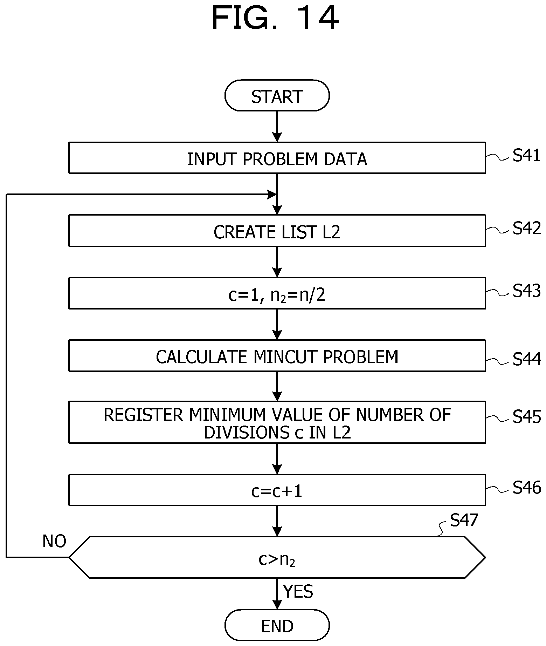

FIG. 14 is a flowchart illustrating processing according to a comparative example. This processing is executed instead of the processing 1 to 3. First, the problem data is acquired (step S41). The list L2 for storing the minimum value of the sum E for each number of divisions is created (step S42). Next, the number of divisions c is set as one, and $n_2$ is set as n/2 (step S43). Next, the MinCut problem in which the number of divisions c is designated is calculated, and the minimum value of the sum E is calculated (step S44). Next, the minimum value of the sum E for the number of divisions c is registered in the list L2 (step S45). Next, the number of divisions c is set as c + 1 (step S46). Next, it is determined whether or not the number of divisions c exceeds $n_2$ (step S47). In a case where it is determined as "No" in step S47, step S42 and the subsequent steps are executed again. In a case where it is determined as "Yes" in step S47, the processing 4 is executed.

In this way, in the comparative example, the number of divisions c is set from one to n/2, and the MinCut problem in which the number of divisions is designated is calculated. The minimum value calculated in each calculation is stored in the list L2, the normalized minimum value is calculated from each minimum value, and the number of divisions with which the normalized minimum value is minimized is selected. In the comparative example, when the MinCut problem in which the number of divisions is designated is calculated, the number of calculation targets is large. As a result, it takes a long time for the calculation.

On the other hand, according to the present embodiment, when the MinCut problem is calculated while designating the number of divisions c, the calculation target is limited. As a result, the number of times of calculation of the MinCut problem in which the number of divisions c is designated can be reduced, and a calculation time of the normalization division calculation can be reduced. For example, in a case where the number of nodes n is set as 50 and the calculation time of the MinCut problem in which the number of divisions is designated is one minute, in the comparative example, 25 times (= 50/2) = 25 is needed. However, in the present embodiment, even if the first calculation of the MinCut problem requires one minute, it is assumed that a half of the number of divisions can be acquired, remaining 13 times of calculation of the MinCut problem in which the number of divisions is designated requires 13 minutes, and a total calculation time of 15 minutes is sufficient.

Note that the MinCut problem has been mainly described above. However, the present embodiment can be applied to the MaxCut problem. In this case, it is sufficient to change the processing 1 to the processing 4 as follows.

(Processing 1)

First, the MaxCut problem is calculated without designating the number of divisions c. From each calculation result, the sums E are sorted in descending order, and top M (< the number of nodes n) sums E are saved. In the list, the numbers of divisions when the M sums E are obtained are saved.

(Processing 2)

Next, a maximum value for each number of divisions is acquired from the M sums E, from a calculation result of the processing 1.

(Processing 3)

For the number of divisions that is not able to be acquired, the MaxCut problem in which the number of divisions is designated is calculated. As a result, the maximum values of the sums E for all the numbers of divisions (c = 1 to n/2) are collected.

(Processing 4)

For each number of divisions (c = 1 to n/2), the normalized maximum value $E_{norm}$ is calculated from the maximum value of each sum E, and the maximum number of divisions c is selected from them.

In addition to the minimum value and the maximum value of each sum E, a cut problem that satisfies other conditions may be calculated.

Note that the node and the edge described above are not particularly limited. However, for example, each node represents a gene sequence. The weight of the edge represents a correlation degree such as a similarity or a deviation degree of the gene sequence. Therefore, to search for the minimum value of the sum E means to cut nodes with a small similarity, and to search for the maximum value of the sum E means to cut nodes with a large similarity.

Furthermore, a calculation method used for the calculation of the MinCut problem or the calculation of the MaxCut problem described above is not particularly limited. However, for example, a binary variable sampling technique may be used. As the binary variable sampling technique, a sampling technique for randomly performing sampling, a sampling technique using an Ising model of a QUBO format, or the like is exemplified.

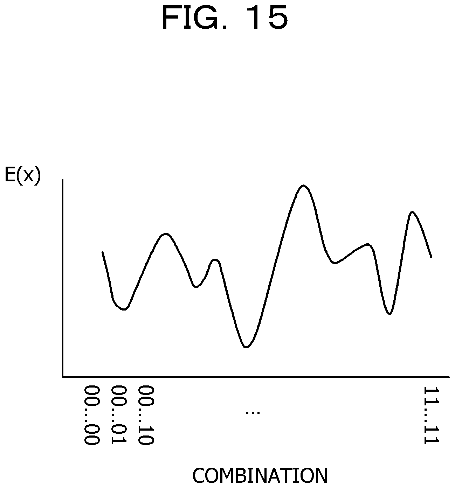

Here, the QUBO format is Quadratic Unconstrained Binary Optimization that is a format, in which binary optimization can be performed, without secondary constraint. The QUBO format can be expressed, for example, as in the following formula. Note that, when $x_i = 0$ or 1, (i = 1, ..., N). The reference $W_{ij}$ represents a coupling coefficient of $x_i$ and $x_j$. The reference $b_i$ represents a bias coefficient of $x_i$. A first term on the right side is a quadratic term and represents an interaction. A second term on the right side is a primary term and represents a bias action. A third term on the right side is a constant term. In the QUBO format, according to the following formula, as illustrated in FIG. 15, a solution x for minimizing E (x) representing energy is searched.

[Mathematical Formula 4]

$$E(x) = -\sum_{i,j} W_{ij} x_i x_j - \sum_i b_i x_i + \text{const.}$$

While the embodiment of has been described above in detail, the embodiment is not limited to such specific embodiments, and various modifications and alterations can be made within the scope of the embodiment disclosed in the claims.

**Claims**

1. An arithmetic program of performing cut problem calculation on a calculation target, the calculation target including a plurality of nodes and a plurality of edges, each node of the plurality of nodes being coupled to at least any one of other nodes with an edge of the plurality of nodes, each edge of the plurality of edges being set with a respective weight value, the cut problem calculation including calculating a total value of weight values of edges cut when the plurality of nodes included in the calculation target is divided into two groups, the arithmetic program being a program for causing a computer to execute processing comprising:

   executing first processing of performing the cut problem calculation without designating the number of divisions that is the number of nodes that belong to the divided two groups and specifying a calculation result of which the total value of the weight values satisfies a first condition, from among the obtained calculation results;
   executing second processing of specifying a calculation result that satisfies a second condition for each number of divisions, from the calculation result specified in the first processing;
   executing third processing of performing the cut problem calculation in which the number of divisions is designated, on each number of divisions that is not able to be specified in the second processing and specifying a calculation result of which the total value of the weight values satisfies a third condition, for each number of divisions; and
   executing fourth processing of calculating a normalized value obtained by normalizing the total value of the weight values specified in the second processing and the third processing by a predetermined function, for each number of divisions and acquiring the number of divisions that satisfies a fourth condition from among the normalized values.

2. The arithmetic program according to claim 1, wherein

   in the first processing, a predetermined number of top calculation results that minimize the total value of the weight values is specified, from among the obtained calculation results,
   in the second processing, a calculation result that minimizes the total value of the weight values is specified for each number of divisions, from the calculation result specified in the first processing,
   in the third processing, the cut problem calculation in which the number of divisions is designated is performed for each number of divisions that is not able to be specified in the second processing, and a calculation result that minimizes the total value of the weight values is specified for each number of divisions, and
   in the fourth processing, a normalized value normalized by the predetermined function is calculated for the total value of the weight values specified in the second processing and the third processing, and the number of divisions to be minimum from among the normalized values is acquired, for each number of divisions.

3. The arithmetic program according to claim 1, wherein

   in the first processing, a predetermined number of top calculation results that maximize the total value of the weight values is specified, from among the obtained calculation results,
   in the second processing, a calculation result that maximizes the total value of the weight values is specified for each number of divisions, from the calculation result specified in the first processing,
   in the third processing, the cut problem calculation in which the number of divisions is designated is performed for each number of divisions that is not able to be acquired in the second processing, and a calculation result that maximizes the total value of the weight values is specified for each number of divisions, and
   in the fourth processing, a normalized value normalized by the predetermined function is calculated for the total value of the weight values specified in the second processing and the third processing, and the number of divisions to be maximum from among the normalized values is acquired, for each number of divisions.

4. The arithmetic program according to claim 1, wherein the predetermined function is a function used to calculate a sum total of a value obtained by dividing the total value of the weight values by a sum total of a sum of the edges in one of the divided groups and a sum of the weights of the cut edges and a value obtained by dividing the total value of the weight values by a sum total of a sum of the edges in another divided group and a sum of the weights of the cut edges.

5. The arithmetic program according to claim 1, wherein

   the node is a gene sequence, and
   a weight value of the edge is a correlation degree between the gene sequences.

6. An arithmetic method implemented by a computer of performing cut problem calculation on a calculation target, the calculation target including a plurality of nodes and a plurality of edges, each node of the plurality of nodes being coupled to at least any one of other nodes with an edge of the plurality of nodes, each edge of the plurality of edges being set with a respective weight value, the cut problem calculation including calculating a total value of weight values of edges cut when the plurality of nodes included in the calculation target is divided into two groups, the arithmetic method comprising:

executing, by a processor circuit of the computer, first processing of performing the cut problem calculation without designating the number of divisions that is the number of nodes that belong to the divided two groups and specifying a calculation result of which the total value of the weight values satisfies a first condition, from among the obtained calculation results;
executing, by the processor circuit of the computer, second processing of specifying a calculation result that satisfies a second condition for each number of divisions, from the calculation result specified in the first processing;
executing, by the processor circuit of the computer, third processing of performing the cut problem calculation in which the number of divisions is designated, on each number of divisions that is not able to be specified in the second processing and specifying a calculation result of which the total value of the weight values satisfies a third condition, for each number of divisions; and
executing, by the processor circuit of the computer, fourth processing of calculating a normalized value obtained by normalizing the total value of the weight values specified in the second processing and the third processing by a predetermined function, for each number of divisions and acquiring the number of divisions that satisfies a fourth condition from among the normalized values.

7. An information processing apparatus of performing cut problem calculation on a calculation target, the calculation target including a plurality of nodes and a plurality of edges, each node of the plurality of nodes being coupled to at least any one of other nodes with an edge of the plurality of nodes, each edge of the plurality of edges being set with a respective weight value, the cut problem calculation including calculating a total value of weight values of edges cut when the plurality of nodes included in the calculation target is divided into two groups, the information processing apparatus comprising a arithmetic unit configured to perform processing comprising:

first processing of performing the cut problem calculation without designating the number of divisions that is the number of nodes that belong to the divided two groups and specifying a calculation result of which the total value of the weight values satisfies a first condition, from among the obtained calculation results;
second processing of specifying a calculation result that satisfies a second condition for each number of divisions, from the calculation result specified in the first processing;
third processing of performing the cut problem calculation in which the number of divisions is designated, on each number of divisions that is not able to be specified in the second processing and specifying a calculation result of which the total value of the weight values satisfies a third condition, for each number of divisions; and
fourth processing of calculating a normalized value obtained by normalizing the total value of the weight values specified in the second processing and the third processing by a predetermined function, for each number of divisions and acquiring the number of divisions that satisfies a fourth condition from among the normalized values.

FIG. 1A

FIG. 1B

# FIG. 2

FIG. 3A

FIG. 3B

# FIG. 4A

# FIG. 4B

| c | DIVISION RESULT | MINIMUM VALUE OF SUM E | NORMALIZED MINIMUM VALUE $E_{norm}$ |
|---|---|---|---|
| 1 | [2] AND [1, 3, 4, 5, 6, 7, 8] | 19 | 1.35 |
| 2 | [1, 7] AND [2, 3, 4, 5, 6, 8] | 20 | 1.24 |
| 3 | [2, 3, 8] AND [1, 4, 5, 6, 7] | 23 | 1.25 |
| 4 | [1, 5, 6, 7] AND [2, 3, 4, 8] | 22 | 1.17 |

# FIG. 5

FIRST DIVISION

SECOND DIVISION

# FIG. 6

TRANSITION OF SOLUTION OF
MINCUT PROBLEM

MINIMUM VALUE

CALCULATION TIME
(NUMBER OF REPETITIONS)

# FIG. 7

| | MINIMUM VALUE OF SUM E | NUMBER OF DIVISIONS c | |
|---|---|---|---|
| 1 | 20 | 3 | MINIMUM VALUE OF c = 3 |
| 2 | 21 | 4 | MINIMUM VALUE OF c = 4 |
| 3 | 22 | 3 | |
| 4 | 22 | 4 | |
| 5 | 25 | 2 | MINIMUM VALUE OF c = 2 |
| 6 | 30 | 3 | |

# FIG. 8

NODE NUMBER

| | | 1 | 2 | 3 | 4 | 5 | 6 | 7 | 8 | DIVISION STATUS |
|---|---|---|---|---|---|---|---|---|---|---|
| REPETITION NUMBER | t | 0 | 0 | 0 | 1 | 0 | 1 | 1 | 1 | [1, 2, 3, 5] AND [4, 6, 7, 8] |
| | t+1 | 0 | 1 | 0 | 1 | 0 | 1 | 1 | 1 | [1, 3, 5] AND [2, 4, 6, 7, 8] |
| | t+2 | 0 | 1 | 0 | 1 | 0 | 1 | 0 | 1 | [1, 3, 5, 7] AND [2, 4, 6, 8] |
| | t+3 | 0 | 1 | 0 | 0 | 0 | 1 | 0 | 1 | [1, 3, 4, 5, 7] AND [2, 6, 8] |
| | t+4 | 0 | 1 | 0 | 0 | 0 | 0 | 0 | 1 | [1, 3, 4, 5, 6, 7] AND [2, 8] |
| | t+5 | 0 | 1 | 0 | 0 | 0 | 0 | 0 | 0 | [1, 3, 4, 5, 6, 7, 8] AND [2] |

# FIG. 9A

100

# FIG. 9B

## FIG. 10A

```
START
  |
  v
ACQUIRE PROBLEM DATA              ~S1
  |
  v
CREATE LIST L1                    ~S2
  |
  v
CALCULATE MINCUT PROBLEM          ~S3
  |
  v
REGISTER TOP M MINIMUM VALUES IN LIST L1   ~S4
  |
  v
END
```

## FIG. 10B

| | MINIMUM VALUE OF SUM E | NUMBER OF DIVISIONS c |
|---|---|---|
| 1 | | |
| 2 | | |
| 3 | | |
| ... | | |
| 4 | | |

# FIG. 11A

```
                    START
                      │
                      ▼
CREATE LIST L2 AND PERFORM INITIALIZATION        ⌇S11
                      │
                      ▼
                    i=1                          ⌇S12
                      │
        ┌────────────►▼
        │                                         S13
        │   HAS i-TH NUMBER OF DIVISIONS c IN L1        YES
        │   BEEN REGISTERED IN L2?                  ─────┐
        │             │ NO                               │
        │             ▼                                  │
        │   REGISTER MINIMUM VALUE OF NUMBER OF    ⌇S14   │
        │   DIVISIONS c IN L2                             │
        │             │◄───────────────────────────────┘
        │             ▼
        │           i=i+1                         ⌇S15
        │             │
        │             ▼                            S16
        │  NO                                          
        └──────  i > M?
                      │ YES
                      ▼
                    END
```

# FIG. 11B

| NUMBER OF DIVISIONS c | MINIMUM NUMBER OF SUM E |
|---|---|
| 1 | |
| 2 | |
| 3 | |
| ... | |
| $n_2$ | |

# FIG. 12

START

c=1 — S21

HAS MINIMUM VALUE OF NUMBER OF DIVISIONS c BEEN REGISTERED IN L2? — S22

YES

NO

DESIGNATE NUMBER OF DIVISIONS c AND CALCULATE MINCUT PROBLEM — S23

REGISTER MINIMUM VALUE IN L2 — S24

c=c+1 — S25

NO

$c > n_2$? — S26

YES

END

# FIG. 13A

```
        ( START )
            │
            ▼
┌─────────────────────────────────────────┐
│ NORMALIZE MINIMUM VALUE OF EACH NUMBER OF│⌇ S31
│     DIVISIONS IN MINIMUM VALUE LIST L2 AND│
│   STORE NORMALIZED MINIMUM VALUE IN LIST L3│
└─────────────────────────────────────────┘
            │
            ▼
┌─────────────────────────────────────────┐
│   SELECT MINIMUM VALUE FROM L3 AND OUTPUT │⌇ S32
│            NUMBER OF DIVISIONS            │
└─────────────────────────────────────────┘
            │
            ▼
         (  END  )
```

# FIG. 13B

| NUMBER OF DIVISIONS $c$ | NORMALIZED MINIMUM VALUE $E_{norm}$ |
|---|---|
| 1 | |
| 2 | |
| 3 | |
| ... | |
| $n_2$ | |

# FIG. 14

START

INPUT PROBLEM DATA — S41

CREATE LIST L2 — S42

$c=1$, $n_2 = n/2$ — S43

CALCULATE MINCUT PROBLEM — S44

REGISTER MINIMUM VALUE OF NUMBER OF DIVISIONS c IN L2 — S45

$c = c+1$ — S46

S47

NO    $c > n_2$

YES

END

# FIG. 15

Europäisches
Patentamt

European
Patent Office

Office européen
des brevets

# EUROPEAN SEARCH REPORT

Application Number

EP 24 18 3349

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAVID R KARGER ET AL: "A new approach to the minimum cut problem", JOURNAL OF THE ASSOCIATION FOR COMPUTING MACHINERY, ACM, NEW YORK, NY, US, vol. 43, no. 4, 1 July 1996 (1996-07-01), pages 601-640, XP058195422, ISSN: 0004-5411, DOI: 10.1145/234533.234534 sections 1 and 2; * abstract * | 1-7 | INV. G06F17/10 |
| A | Henzinger Monika ET AL: "Practical Minimum Cut Algorithms" In: "2018 Proceedings of the Twentieth Workshop on Algorithm Engineering and Experiments (ALENEX)", 17 August 2017 (2017-08-17), Society for Industrial and Applied Mathematics, XP093228079, ISBN: 978-1-61197-505-5 pages 48-61, DOI: 10.1137/1.9781611975055.5, Retrieved from the Internet: URL:https://arxiv.org/pdf/1708.06127> * section 4 and Appendix A * | 1-7 | |

TECHNICAL FIELDS
SEARCHED      (IPC)

G06F

The present search report has been drawn up for all claims

| Place of search | Date of completion of the search | Examiner |
|---|---|---|
| Berlin | 27 November 2024 | Virnik, Elena |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**EP 4 510 012 A1**

## REFERENCES CITED IN THE DESCRIPTION

**Patent documents cited in the description**

- JP 2020004387 A
- JP 2021081863 A